# EUROPEAN PATENT SPECIFICATION

(11) **EP 1 574 557 B1**
(45) Date of publication and mention of the grant of the patent: **13.02.2008**
(21) Application number: 05004820.6
(22) Date of filing: 04.03.2005
(51) Int. Cl.: C09J 133/06, C09J 133/02, C09J 7/02, B32B 7/12

(54) **Transparent double-sided pressure-sensitive adhesive tape or sheet and touch panel**
Transparentes Band oder transparente Folie mit beidseitiger druckempfindlicher Haftklebeschicht und Berührungstafel
Bande ou feuille transparente adhésive sensible à la pression double face et écran tactile

(30) Priority: 12.03.2004 JP 2004070501
(43) Date of publication of application: 14.09.2005
(73) Proprietor: NITTO DENKO CORPORATION, Osaka (JP)
(72) Inventor: Kishioka, Hiroaki, Ibaraki-shi Osaka (JP); Tosaki, Yutaka, Ibaraki-shi Osaka (JP)
(74) Representative: Grünecker, Kinkeldey, Stockmair & Schwanhäusser Anwaltssozietät

(56) References cited:
- EP-A- 1 491 604
- US-A1- 2003 232 192

## Description

### FIELD OF THE INVENTION

The present invention relates to a transparent double-sided pressure-sensitive adhesive tape or sheet and a touch panel. More particularly, the invention relates to a transparent double-sided pressure-sensitive adhesive tape or sheet excellent in transparency, lifting/peeling preventive properties, and warpage preventive properties, and to a touch panel employing the transparent double-sided pressure-sensitive adhesive tape or sheet.

### BACKGROUND OF THE INVENTION

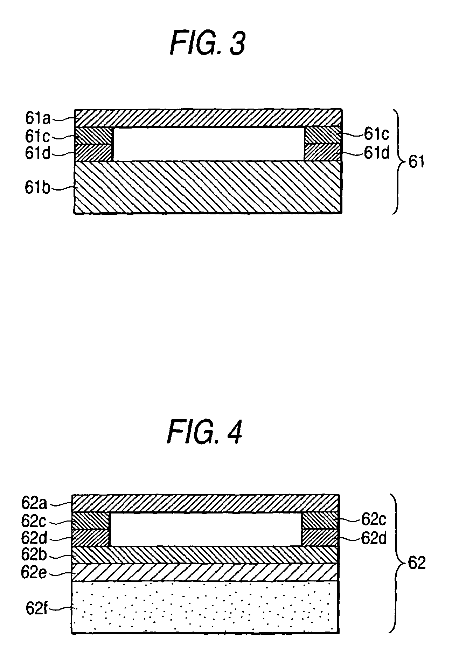

The market for mobile communication terminals (e.g., mobile telephone terminals, such as cell phones and PHS terminals, and PDA terminals) and the like has become large in recent years. With respect to such mobile communication terminals, the major technical subjects which are desired to be pursued include thickness reduction, weight reduction, power consumption reduction, resolution enhancement, and brightness enhancement. Especially in PDAs having a touch panel as an input unit, the touch panels having the constitution including a conductive glass and a transparent conductive plastic film [e.g., a transparent conductive poly(ethylene terephthalate) film (conductive PET) obtained by forming a conductive layer, e.g., ITO (indium-tin oxide), on one side of a poly(ethylene terephthalate) film as a substrate] laminated to the glass with a pressure-sensitive adhesive (touch panels of the so-called "F/G type"), such as that shown in Fig. 3, are being replaced by touch panels having a constitution obtained by disposing two transparent conductive plastic films (e.g., conductive PET films) so that those sides of the films which have a conductive layer formed thereon face each other (the two films are oppositely disposed) and laminating the plastic films to a transparent plastic base comprising a polycarbonate or the like, as a reinforcement, through a transparent pressure-sensitive adhesive (touch panels of the so-called "F/F/P type"), such as that shown in Fig. 4, from the standpoints of weight reduction and breakage prevention. Such a touch panel having the constitution obtained through laminating to a transparent plastic base is fixed to an LCD module by bonding with a pressure-sensitive adhesive layer formed in architrave pattern arrangement on the module.

Fig. 3 is a diagrammatic sectional view showing one example of touch panels of the F/G type constitution heretofore in use. Fig. 4 is a diagrammatic sectional view showing one example of touch panels of the F/F/P type constitution heretofore in use. In Figs. 3 and 4, numeral 61 denotes a touch panel of the F/G type constitution, 61a an upper conductive PET, 61b a lower conductive glass, 61c an adhesive layer, 61d a silver paste layer, 62 a touch panel of the F/F/P type constitution, 62a an upper conductive PET, 62b a lower conductive PET, 62c an adhesive layer, 62d a silver paste layer, 62e a transparent double-sided pressure-sensitive adhesive tape, and 62f a transparent reinforcing plate.

For the application of a touch panel of the F/F/P type to a transparent reinforcing plate as a reinforcement, a transparent double-sided pressure-sensitive adhesive tape or sheet is extensively used as shown in Fig. 4. As this transparent double-sided pressure-sensitive adhesive tape or sheet is widely used a double-sided pressure-sensitive adhesive tape or sheet of the substrate-less type constituted of a transparent pressure-sensitive adhesive layer only (substrate-less double-sided pressure-sensitive adhesive tape or sheet). Such substrate-less double-sided pressure-sensitive adhesive tapes or sheets are required to have lifting/peeling preventive properties (unsusceptibility to peeling by outgassing), i.e., the property of causing neither lifting nor peeling at the adhering interface, even under severe conditions such as high-temperature conditions or high-temperature high-humidity conditions. Specifically, there are the following problems. Although transparent bases made of a polycarbonate or the like are extensively used as the transparent plastic bases serving as transparent reinforcing plates, there are cases where these transparent plastic bases such as transparent polycarbonate bases suffer outgassing, which is thought to be attributable to the water absorbed or residual monomers and is causative of blistering. Because of this, when such a transparent plastic base, e.g., a transparent polycarbonate base, has been laminated to a substrate film having barrier properties, such as, e.g., a poly(ethylene terephthalate) (PET) film, through a double-sided pressure-sensitive adhesive tape or sheet, then lifting or peeling occurs at the adhering interface between the base and the pressure-sensitive adhesive layer under severe conditions, e.g., high-temperature conditions or high-temperature high-humidity conditions, due to the bubbles generated from the transparent plastic bases (outgassing). This not only results in a poor appearance but considerably impairs visibility.

Attempts have hence been made to prevent the lifting or peeling even when bubbles are generated from the transparent plastic bases or the like. Examples thereof include: a technique in which the molecular weight of an acrylic polymer to be used as the base polymer of a pressure-sensitive adhesive is appropriately regulated; a technique in which various additives including, e.g., a tackifier are added to a pressure-sensitive adhesive so as to heighten adhesion to transparent plastic bases; and a technique in which monomers including a monomer ingredient capable of heightening adhesion are copolymerized to produce the base polymer of a pressure-sensitive adhesive (see JP-A-1-178567, JP-A-2003-238915, JP-A-2003-342542, JP-A-7-228850, JP-A-10-279907, JP-A-10-310754, JP-A-2000-73025, JP-A-2000-73026, JP-A-2000-109771, JP-A-2001-335767 and JP-A-2002-30264 (the term "JP-A" as used herein means an "unexamined published Japanese patent application")).

However, the technique in which the molecular weight of an acrylic polymer to be used as the base polymer of a pressure-sensitive adhesive is appropriately regulated has a drawback that the improvement in lifting/peeling preventive properties (unsusceptibility to peeling by outgassing) attained therewith is limited. The technique in which a tackifier is added to a pressure-sensitive adhesive has a drawback that since incorporation of a large amount of a tackifier impairs transparency, the amount of the tackifier to be incorporated is limited as a matter of course. Consequently, the improvement of lifting/peeling preventive properties is limited in this case also. Furthermore, even when the polymer composition showing enhanced adhesion is used, the lifting/peeling preventive properties thereof are limited, and this technique failed to satisfy a high level of requirement.

On the other hand, there recently is a growing tendency to reduce the thicknesses of transparent plastic bases (e.g., transparent polycarbonate bases) for use as transparent reinforcing plates to thereby reduce the thicknesses of touch panels. Thickness reduction in transparent plastic bases has posed a problem, for example, that the touch panel employing a transparent plastic base (e.g., touch panel of the F/F/P type) warps considerably under severe conditions, e.g., high-temperature conditions or high-temperature high-humidity conditions, and none of the transparent double-sided pressure-sensitive adhesive tapes or sheets heretofore in use can completely inhibit this warpage. Because of this, transparent double-sided pressure-sensitive adhesive tapes or sheets are required to have warpage preventive properties, i.e., the property of preventing the adherend, e.g., a touch panel, employing a transparent plastic base from warping even under severe conditions causative of adherend warpage (e.g., high-temperature conditions or high-temperature high-humidity conditions) .

### SUMMARY OF THE INVENTION

Accordingly, an object of the invention is to provide a transparent double-sided pressure-sensitive adhesive tape or sheet which has excellent transparency and is excellent also in lifting/peeling preventive properties and warpage preventive properties, and to provide a touch panel employing the transparent double-sided pressure-sensitive adhesive tape or sheet.

Another object of the invention is to provide a transparent double-sided pressure-sensitive adhesive tape or sheet suitable for use in producing a touch panel of the type having a transparent plastic base, and to provide a touch panel employing this transparent double-sided pressure-sensitive adhesive tape or sheet.

The present inventors made intensive investigations in order to accomplish those objects. As a result, it has been found that when an acrylic pressure-sensitive adhesive composition comprising a combination of a specific acrylic polymer and a specific oligomer is used as a pressure-sensitive adhesive to form a transparent pressure-sensitive adhesive layer on each side of a transparent substrate to produce a transparent double-sided pressure-sensitive adhesive tape or sheet and this pressure-sensitive adhesive type or sheet is used to produce a touch panel of the type having a transparent plastic base, then this touch panel can exhibit excellent transparency and suffers neither lifting nor peeling at the adhering interface even when bubbles are generated from, e.g., the transparent plastic base as a transparent reinforcing plate under severe conditions, e.g., at high temperatures. It has been further found that this touch panel, which employs a transparent plastic base, can be inhibited or prevented from warping. The invention has been completed based on these findings.

Namely, the invention provides a transparent double-sided pressure-sensitive adhesive tape or sheet having a total light transmittance of 85% or higher in the visible light wavelength region and a haze of 2% or lower comprising a transparent substrate and a transparent pressure-sensitive adhesive layer disposed on each side of the substrate, wherein the transparent pressure-sensitive adhesive layer disposed on at least one side of the transparent substrate is a layer formed from a pressure-sensitive adhesive composition comprising the following acrylic polymer (a) and oligomer (b):
acrylic polymer (a): an acrylic polymer having a weight-average molecular weight of 500,000-900,000 formed from monomers comprising at least one alkyl (meth)acrylate in which the alkyl group has 4-12 carbon atoms as the main monomer ingredient and at least one carboxyl-containing monomer contained as another monomer ingredient in an amount of 3-10 parts by weight per 100 parts by weight of all monomer ingredients,
oligomer (b): an oligomer having a weight-average molecular weight of 3,000-6,000 formed from monomers comprising at least one ethylenically unsaturated monomer, as the main monomer ingredient, which gives a homopolymer having a glass transition temperature of 60-190°C and has a cyclic structure and at least one carboxyl-containing monomer contained as another monomer ingredient in an amount of 3-10 parts by weight per 100 parts by weight of all monomer ingredients.

In the pressure-sensitive adhesive composition for forming at least one of the transparent pressure-sensitive adhesive layers in the transparent double-sided pressure-sensitive adhesive tape or sheet, the proportion of the oligomer (b) is preferably 10-35 parts by weight per 100 parts by weight of the acrylic polymer (a). The carboxyl-containing monomer as a monomer ingredient in each of the acrylic polymer (a) and the oligomer (b) preferably is acrylic acid. Furthermore, it is preferred that neither the monomer ingredients used for the acrylic polymer (a) nor the monomer ingredients used for the oligomer (b) include any monomer containing one or more nitrogen atoms.

The transparent double-sided pressure-sensitive adhesive tape or sheet has a total light transmittance of 85% or higher in the visible light wavelength region and a haze of 2.0% or lower.

The invention further provides a touch panel of the type having a transparent plastic base, the touch panel having a constitution in which the transparent double-sided pressure-sensitive adhesive tape or sheet described above has been laminated to the transparent plastic base so that the transparent pressure-sensitive adhesive layer formed from the pressure-sensitive adhesive composition comprising the acrylic polymer (a) and the oligomer (b), of the two transparent pressure-sensitive adhesive layers of the transparent double-sided pressure-sensitive adhesive tape or sheet, is in contact with the transparent plastic base.

The transparent plastic base preferably is a transparent base made of a polycarbonate.

Since the transparent double-sided pressure-sensitive adhesive tape or sheet of the invention has the constitution described above, it has excellent transparency and is excellent also in lifting/peeling preventive properties and warpage preventive properties. Consequently, this transparent double-sided pressure-sensitive adhesive tape or sheet is suitable for use in producing a touch panel of the type having a transparent plastic base.

### BRIEF DESCRIPTION OF THE DRAWINGS

Fig. 1 is a diagrammatic sectional view showing part of one embodiment of the transparent double-sided pressure-sensitive adhesive sheet of the invention.
Fig. 2 is a diagrammatic sectional view showing one example of touch panels which employ the transparent double-sided pressure-sensitive adhesive tape or sheet shown in Fig. 1 and are of the type having a transparent plastic base.
Fig. 3 is a diagrammatic sectional view showing one example of touch panels of the F/G type constitution heretofore in use.
Fig. 4 is a diagrammatic sectional view showing one example of touch panels of the F/F/P type constitution heretofore in use.

### Description of the Reference Numerals and Signs

1 transparent double-sided pressure-sensitive adhesive sheet
2 transparent substrate
3 transparent pressure-sensitive adhesive layer
4 transparent pressure-sensitive adhesive layer
5 touch panel of the type having transparent plastic base
51 two transparent conductive plastic films disposed so that conductive-layer sides face each other (touch panel main body part)
51a upper conductive plastic film
51b lower conductive plastic film
51c adhesive layer
51d silver paste layer
52 transparent plastic base
61 touch panel of the F/G type constitution
61a upper conductive PET
61b lower conductive glass
61c adhesive layer
61d silver paste layer
62 touch panel of the F/F/P type constitution
62a upper conductive PET
62b lower conductive PET
62c adhesive layer
62d silver paste layer
62e transparent double-sided pressure-sensitive adhesive tape
62f transparent reinforcing plate

### DETAILED DESCRIPTION OF THE INVENTION

The invention will be explained below by reference to the drawings, wherein like members or parts are sometimes designated by like numerals or signs.

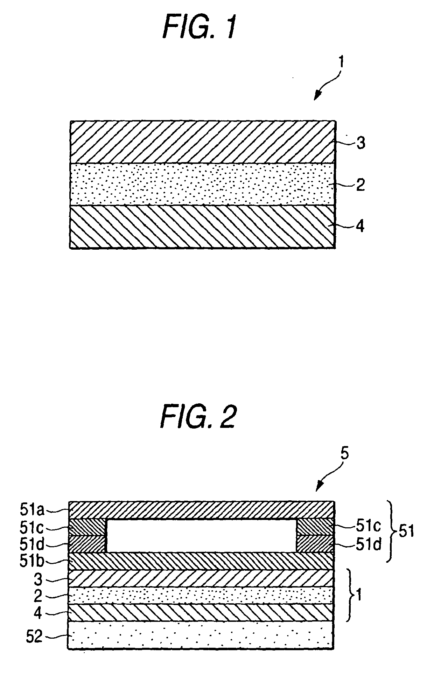

Fig. 1 is a diagrammatic sectional view showing part of one embodiment of the transparent double-sided pressure-sensitive adhesive sheet of the invention. In Fig. 1, numeral 1 denotes a transparent double-sided pressure-sensitive adhesive sheet, 2 a transparent substrate, 3 a transparent pressure-sensitive adhesive layer, and 4 a transparent pressure-sensitive adhesive layer. The transparent double-sided pressure-sensitive adhesive sheet 1 shown in Fig. 1 has transparent pressure-sensitive adhesive layers (3 and 4) formed respectively on both sides of the transparent substrate 2.

The transparent double-sided pressure-sensitive adhesive tape or sheet of the invention has a constitution which comprises a transparent substrate and a transparent pressure-sensitive adhesive layer formed on each side of the substrate, as shown in Fig. 1, and in which the transparent pressure-sensitive adhesive layer disposed on at least one side of the transparent substrate is a layer formed from a pressure-sensitive adhesive composition comprising the following acrylic polymer (a) and oligomer (b) (this composition is sometimes referred to as "oligomer-containing acrylic pressure-sensitive adhesive composition").

Acrylic polymer (a): an acrylic polymer having a weight-average molecular weight of 500,000-900,000 formed from monomers comprising at least one alkyl (meth)acrylate in which the alkyl group has 4-12 carbon atoms as the main monomer ingredient and at least one carboxyl-containing monomer contained as another monomer ingredient in an amount of 3-10 parts by weight per 100 parts by weight of all monomer ingredients

Oligomer (b): an oligomer having a weight-average molecular weight of 3,000-6,000 formed from monomers comprising at least one ethylenically unsaturated monomer, as the main monomer ingredient, which gives a homopolymer having a glass transition temperature of 60-190°C and has a cyclic structure and at least one carboxyl-containing monomer contained as another monomer ingredient in an amount of 3-10 parts by weight per 100 parts by weight of all monomer ingredients

### [Acrylic Polymer (a)]

The acrylic polymer (a) is formed from monomers comprising at least one alkyl (meth)acrylate in which the alkyl group has 4-12 carbon atoms [sometimes referred to as "C₄₋₁₂-alkyl (meth)acrylate"] as the main monomer ingredient and at least one carboxyl-containing monomer contained as another monomer ingredient in an amount of 3-10 parts by weight per 100 parts by weight of all monomer ingredients. Consequently, the acrylic polymer (a) is an acrylic polymer formed from monomers comprising a C₄₋₁₂-alkyl (meth)acrylate and a carboxyl-containing monomer. Other monomer ingredients may be used according to need.

The C₄₋₁₂-alkyl (meth)acrylate to be used for producing the acrylic polymer (a) is not particularly limited as long as it is an alkyl (meth)acrylate (alkyl acrylate or alkyl methacrylate) in which the alkyl group has 4-12 carbon atoms. Examples thereof include n-butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth) acrylate, isononyl (meth)acrylate, decyl (meth)acrylate, isodecyl (meth)acrylate, undecyl (meth)acrylate, and dodecyl (meth)acrylate. Especially preferably, the C₄₋₁₂-alkyl (meth)acrylate is n-butyl (meth)acrylate.

Such C₄₋₁₂-alkyl (meth)acrylates can be used alone or in combination of two or more thereof as the main monomer ingredient.

It is important for the acrylic polymer (a) that the proportion of the C₄₋₁₂-alkyl (meth)acrylate should be 50% by weight or higher based on all monomer ingredients because it is used as the main monomer ingredient. The proportion thereof is preferably 80% by weight or higher, more preferably 90% by weight or higher. Incidentally, with respect to the upper limit of the proportion of the C₄₋₁₂-alkyl (meth)acrylate to all monomer ingredients, the proportion thereof is desirably 99% by weight or lower (especially 97% by weight or lower) because at least a carboxyl-containing monomer is included in the other monomer ingredient(s). In case where the proportion of the C₄₋₁₂-alkyl (meth)acrylate is lower than 50% by weight based on all monomer ingredients, peel force and cohesive force decrease.

A carboxyl-containing monomer is used as another monomer ingredient for the acrylic polymer (a). Examples of the carboxyl-containing monomer include (meth)acrylic acid (acrylic acid and methacrylic acid), itaconic acid, maleic acid, fumaric acid, and crotonic acid. These carboxyl-containing monomers in their acid anhydride forms (e.g., monomers containing an acid anhydride group, such as maleic anhydride and itaconic anhydride) also can be used as the carboxyl-containing monomer.

The proportion of the carboxyl-containing monomer can be selected in the range of 3-10 parts by weight (preferably 3-8 parts by weight, more preferably 3-5 parts by weight) per 100 parts by weight of all monomer ingredients. In case where the proportion of the carboxyl-containing monomer is too low, satisfactory adhesion to adherends is not secured. On the other hand, too high proportions thereof may lead to problems, e.g., poor applicability due to an increase in the viscosity of the pressure-sensitive adhesive.

In producing the acrylic polymer (a), monomers (copolymerizable monomers) copolymerizable with the C₄₋₁₂-alkyl (meth)acrylate and with the carboxyl-containing monomer may be used in combination with these monomers according to need. The proportion of such copolymerizable monomers can be suitably selected in the range up to less than 50 parts by weight per 100 parts by weight of all monomer ingredients according to the kinds of the monomer ingredients. However, for imparting satisfactory pressure-sensitive adhesive properties, it is desirable that one or more copolymerizable monomers be used in such an amount as to yield an acrylic polymer (a) having a glass transition temperature of -20°C or lower (preferably -70 to -35°C).

Examples of such copolymerizable monomers include C₁₋₃-alkyl (meth)acrylates such as methyl (meth)acrylate, ethyl (meth)acrylate, propyl (meth)acrylate, and isopropyl (meth)acrylate; C₁₃₋₂₀-alkyl (meth)acrylates such as tridecyl (meth) acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate; (meth)acrylates containing a non-aromatic ring, such as cycloalkyl (meth)acrylates [e.g., cyclohexyl (meth)acrylate] and isobornyl (meth)acrylate; (meth)acrylates containing an aromatic ring, such as aryl (meth)acrylates [e.g., phenyl (meth)acrylate], aryloxyalkyl (meth)acrylates [e.g., phenoxyethyl (meth)acrylate], and arylalkyl (meth)acrylates [e.g., benzyl (meth)acrylate]; acrylic monomers containing an epoxy group, such as glycidyl (meth)acrylate and methylglycidyl (meth)acrylate; vinyl ester monomers such as vinyl acetate and vinyl propionate; styrene monomers such as styrene and α-methylstyrene; hydroxyl-containing monomers such as hydroxyethyl (meth)acrylate, hydroxypropyl (meth)acrylate, and hydroxybutyl (meth)acrylate; alkoxyalkyl (meth)acrylate monomers such as methoxyethyl (meth)acrylate and ethoxyethyl (meth)acrylate; olefin monomers such as ethylene, propylene, isoprene, and butadiene; and vinyl ether monomers such as vinyl ether.

Examples of the copolymerizable monomers usable in producing the acrylic polymer (a) further include polyfunctional monomers such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, glycerol di(meth)acrylate, trimethylolpropane tri(meth)acrylate, pentaerythritol tri(meth)acrylate, dipentaerythritol hexa(meth)acrylate, epoxy acrylates, polyester acrylates, urethane acrylates, divinylbenzene, butyl di(meth)acrylate, and hexyl di(meth)acrylate.

Monomers containing one or more nitrogen atoms [e.g., aminoalkyl (meth)acrylate monomers such as aminoethyl (meth)acrylate, N,N-dimethylaminoethyl (meth)acrylate, and t-butylaminoethyl (meth)acrylate; (meth)acrylamide and (N-substituted)amide monomers such as N,N-dimethyl(meth)acrylamide, N-butyl(meth)acrylamide, and N-hydroxy(meth)acrylamide; cyanoacrylate monomers such as acrylonitrile and methacrylonitrile; and monomers containing an isocyanate group, such as 2-methacryloyloxyethyl isocyanate] may be used as copolymerizable monomers. However, use of such monomers containing one or more nitrogen atoms is undesirable because it is causative of the yellowing of the pressure-sensitive adhesive at high temperatures.

The acrylic polymer (a) can be prepared by known or common polymerization methods. Examples of polymerization methods for producing the acrylic polymer (a) include solution polymerization, emulsion polymerization, bulk polymerization, and polymerization with ultraviolet irradiation. Solution polymerization is preferred from the standpoints of transparency, water resistance, cost, etc.

Polymerization initiators, chain transfer agents, and the like for use in polymerization for producing the acrylic polymer (a) are not particularly limited, and can be suitably selected from known or common ones. Specific examples of the polymerization initiators include azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), and dimethyl 2,2'-azobis(2-methylpropionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. In the case of solution polymerization, it is preferred to use an oil-soluble polymerization initiator. Such polymerization initiators can be used alone or in combination of two or more thereof. The amount of the polymerization initiator to be used is not particularly limited as long as it is an ordinary amount. For example, the amount thereof can be selected in the range of about 0.01-1 part by weight per 100 parts by weight of all monomer ingredients.

Examples of the chain transfer agents include 2-mercaptoethanol, lauryl mercaptan, glycidyl mercaptan, mercaptoacetic acid, 2-ethylhexyl thioglycolate, 2,3-dimercapto-1-propanol, and α-methylstyrene dimer.

In solution polymerization, various general solvents can be used. Examples of such solvents include organic solvents such as esters, e.g., ethyl acetate and n-butyl acetate; aromatic hydrocarbons, e.g., toluene and benzene; aliphatic hydrocarbons, e.g., n-hexane and n-heptane; alicyclic hydrocarbons, e.g., cyclohexane and methylcyclohexane; and ketones such as methyl ethyl ketone and methyl isobutyl ketone. Such solvents can be used alone or in combination of two or more thereof.

It is important in the invention that the acrylic polymer (a) should have a weight-average molecular weight which is 500,000 or higher and 900,000 or lower (500,000-900,000). The weight-average molecular weight of the acrylic polymer (a) is preferably 550,000-850,000 (more preferably 600,000-800,000). In case where the weight-average molecular weight of the acrylic polymer (a) is lower than 500,000, the adhesive force required of pressure-sensitive adhesives cannot be exhibited. On the other hand, when the weight-average molecular weight thereof exceeds 900,000, there are cases where problems arise such as, e.g., poor applicability due to an increase in the viscosity of the pressure-sensitive adhesive.

The weight-average molecular weight of the acrylic polymer (a) can be controlled by selecting or regulating the kinds and amounts of the polymerization initiator and chain transfer agent, polymerization conditions including temperature, time, monomer concentration, and monomer dropping rate, etc.

### [Oligomer (b)]

The oligomer (b) is an oligomer formed from monomers comprising at least one ethylenically unsaturated monomer which gives a homopolymer having a glass transition temperature of 60-190°C and has a cyclic structure [this monomer is sometimes referred to as "ring-containing ethylenically unsaturated monomer giving a T_{g} of 60-190°C"] as the main monomer ingredient and at least one carboxyl-containing monomer contained as another monomer ingredient in an amount of 3-10 parts by weight per 100 parts by weight of all monomer ingredients. Namely, the oligomer (b) is an oligomer formed from monomers comprising a ring-containing ethylenically unsaturated monomer giving a T_{g} of 60-190°C and a carboxyl-containing monomer. Other monomer ingredients may be used according to need.

The ring-containing ethylenically unsaturated monomer giving a T_{g} of 60-190°C, which is to be used for producing the oligomer (b), is not particularly limited as long as it is an ethylenically unsaturated monomer which gives a homopolymer having a glass transition temperature (T_{g}) of 60-190°C and has a cyclic structure in the molecule. The ring(s) in this ring-containing ethylenically unsaturated monomer giving a T_{g} of 60-190°C may be any of aromatic rings and non-aromatic rings. However, non-aromatic rings are preferred. Examples of the aromatic rings include aromatic hydrocarbon rings (e.g., benzene ring and fused carbon rings as in naphthalene) and various aromatic heterocycles. Examples of the non-aromatic rings include non-aromatic alicycles (e.g., cycloalkane rings such as cyclopentane ring, cyclohexane ring, cycloheptane ring, and cyclooctane ring; and cycloalkene rings such as cyclohexene ring), and non-aromatic bridged rings (e.g., dicyclic hydrocarbon rings as in pinane, pinene, bornane, norbornane, and norbornene; tricyclic hydrocarbon rings as in adamantane; and other bridged hydrocarbon rings including tetracyclic hydrocarbon rings).

As the ring-containing ethylenically unsaturated monomer giving a T_{g} of 60-190°C can be used an ethylenically unsaturated monomer which gives a homopolymer having a glass transition temperature of 60-190°C and is suitably selected from ethylenically unsaturated monomers having a cyclic structure in the molecule, such as (meth)acrylic esters containing a non-aromatic ring, e.g., cycloalkyl (meth)acrylates such as cyclohexyl (meth)acrylate and isobornyl (meth)acrylate; (meth)acrylic esters containing an aromatic ring, e.g., aryl (meth)acrylates such as phenyl (meth)acrylate, aryloxyalkyl (meth)acrylates such as phenoxyethyl (meth)acrylate, and arylalkyl (meth)acrylates such as benzyl (meth)acrylate; and styrene monomers, e.g., styrene and α-methylstyrene. Namely, use can be made of such ethylenically unsaturated monomers having a cyclic structure which give homopolymers having a glass transition temperature (T_{g}) of 60-190°C.

Especially preferred examples of the ring-containing ethylenically unsaturated monomer giving a T_{g} of 60-190°C, in the invention, are (meth)acrylic esters having a non-aromatic ring, such as cyclohexyl methacrylate and isobornyl (meth) acrylate. In particular, cyclohexyl methacrylate can be advantageously used from the standpoint of transparency.

Such ring-containing ethylenically unsaturated monomers giving a T_{g} of 60-190°C can be used alone or in combination of two or more thereof as the main monomer ingredient.

It is important for the oligomer (b) that the proportion of the ring-containing ethylenically unsaturated monomer giving a T_{g} of 60-190°C should be 50% by weight or higher based on all monomer ingredients because it is used as the main monomer ingredient. The proportion thereof is preferably 80% by weight or higher, more preferably 90% by weight or higher. Incidentally, with respect to the upper limit of the proportion of the ring-containing ethylenically unsaturated monomer giving a T_{g} of 60-190°C to all monomer ingredients, the proportion thereof is desirably 99% by weight or lower (especially 97% by weight or lower) because at least a carboxyl-containing monomer is included in the other monomer ingredient(s). In case where the proportion of the ring-containing ethylenically unsaturated monomer giving a T_{g} of 60-190°C is lower than 50% by weight based on all monomer ingredients, peel force and cohesive force decrease.

A carboxyl-containing monomer is used as another monomer ingredient for the oligomer (b). Examples of the carboxyl-containing monomer include (meth)acrylic acid, itaconic acid, maleic acid, fumaric acid, and crotonic acid as in the case of the carboxyl-containing monomer for the acrylic polymer (a). These carboxyl-containing monomers in their acid anhydride forms (e.g., monomers containing an acid anhydride group, such as maleic anhydride and itaconic anhydride) also can be used as the carboxyl-containing monomer.

The proportion of the carboxyl-containing monomer can be selected in the range of 3-10 parts by weight (preferably 3-8 parts by weight, more preferably 3-5 parts by weight) per 100 parts by weight of all monomer ingredients. Too low proportions of the carboxyl-containing monomer are undesirable because transparency tends to decrease. On the other hand, too high proportions thereof are undesirable because temperature control during polymerization tends to be difficult.

In producing the oligomer (b), monomers (copolymerizable monomers) copolymerizable with the ring-containing ethylenically unsaturated monomer giving a T_{g} of 60-190°C and with the carboxyl-containing monomer may be used in combination with these monomers according to need. The proportion of such copolymerizable monomers can be suitably selected in the range up to less than 50 parts by weight per 100 parts by weight of all monomer ingredients according to the kinds of the monomer ingredients. However, for imparting satisfactory pressure-sensitive adhesive properties, it is desirable that one or more copolymerizable monomers be used in such an amount as to yield an oligomer (b) having a glass transition temperature of 60°C or higher (preferably 65-180°C). In case where the oligomer (b) has a glass transition temperature lower than 60°C, the pressure-sensitive adhesive has reduced adhesive properties, resulting in reduced lifting/peeling preventive properties.

Examples of such copolymerizable monomers include alkyl (meth)acrylates such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, and isodecyl (meth)acrylate; acrylic monomers containing an epoxy group, such as glycidyl (meth)acrylate and methylglydicyl (meth)acrylate; vinyl ester monomers such as vinyl acetate and vinyl propionate; hydroxyl-containing monomers such as hydroxyethyl (meth)acrylate, hydroxypropyl (meth)acrylate, and hydroxybutyl (meth)acrylate; alkoxyalkyl (meth)acrylate monomers such as methoxyethyl (meth)acrylate and ethoxyethyl (meth)acrylate; olefin monomers such as ethylene, propylene, isoprene, and butadiene; and vinyl ether monomers such as vinyl ether.

Examples of the copolymerizable monomers usable in producing the oligomer (b) further include polyfunctional monomers such as hexanediol di(meth)acrylate, (poly) ethylene glycol di(meth)acrylate, (poly)propylene glycol di(meth)acrylate, neopentyl glycol di(meth)acrylate, pentaerythritol di(meth)acrylate, glycerol di(meth)acrylate, trimethylolpropane tri(meth)acrylate, pentaerythritol tri(meth)acrylate, dipentaerythritol hexa(meth)acrylate, epoxy acrylates, polyester acrylates, urethane acrylates, divinylbenzene, butyl di(meth)acrylate, and hexyl di(meth)acrylate.

Monomers containing one or more nitrogen atoms [e.g., aminoalkyl (meth)acrylate monomers such as aminoethyl (meth)acrylate, N,N-dimethylaminoethyl (meth)acrylate, and t-butylaminoethyl (meth)acrylate; (meth)acrylamide and (N-substituted)amide monomers such as N,N-dimethyl(meth)acrylamide, N-butyl(meth)acrylamide, and N-hydroxy(meth)acrylamide; cyanoacrylate monomers such as acrylonitrile and methacrylonitrile; and monomers containing an isocyanate group, such as 2-methacryloyloxyethyl isocyanate] may be used as copolymerizable monomers. However, use of such monomers containing one or more nitrogen atoms is undesirable because it is causative of the yellowing of the pressure-sensitive adhesive at high temperatures.

The oligomer (b) can be prepared by known or common polymerization methods. Examples of polymerization methods for producing the oligomer (b) include solution polymerization, emulsion polymerization, bulk polymerization, and polymerization with ultraviolet irradiation, as in the polymerization methods for producing the acrylic polymer (a). Solution polymerization is preferred from the standpoints of transparency, water resistance, cost, etc.

Polymerization initiators, chain transfer agents, and the like for use in polymerization for producing the oligomer (b) are not particularly limited, and can be suitably selected from known or common ones. Specific examples of the polymerization initiators include the same initiators as those enumerated above, i.e., azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), and dimethyl 2,2'-azobis(2-methylpropionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. In the case of solution polymerization, it is preferred to use an oil-soluble polymerization initiator. Such polymerization initiators can be used alone or in combination of two or more thereof. The amount of the polymerization initiator to be used is not particularly limited as long as it is an ordinary amount. For example, the amount thereof can be selected in the range of about 0.1-15 parts by weight per 100 parts by weight of all monomer ingredients.

Examples of the chain transfer agents include 2-mercaptoethanol, lauryl mercaptan, glycidyl mercaptan, mercaptoacetic acid, 2-ethylhexyl thioglycolate, 2,3-dimercapto-1-propanol, and α-methylstyrene dimer. The amount of the chain transfer agent to be used can be selected in the range of, for example, about 0.01-15 parts by weight per 100 parts by weight of all monomer ingredients.

In solution polymerization, various general solvents can be used. Examples of such solvents include organic solvents such as esters, e.g., ethyl acetate and n-butyl acetate; aromatic hydrocarbons, e.g., toluene and benzene; aliphatic hydrocarbons, e.g., n-hexane and n-heptane; alicyclic hydrocarbons, e.g., cyclohexane and methylcyclohexane; and ketones such as methyl ethyl ketone and methyl isobutyl ketone. Such solvents can be used alone or in combination of two or more thereof.

It is important in the invention that the oligomer (b) should have a weight-average molecular weight which is 3,000 or higher and 6,000 or lower (3,000-6,000). The weight-average molecular weight of the oligomer (b) is preferably 3,300-5,500 (more preferably 3,500-5,000).

The weight-average molecular weight of the oligomer (b) can be controlled by selecting or regulating the kinds and amounts of the polymerization initiator and chain transfer agent, polymerization conditions including temperature, time, monomer concentration, and monomer dropping rate, etc.

In the invention, the weight-average molecular weights (Mw) of the acrylic polymer (a) and the oligomer (b) can be determined by gel permeation chromatography (GPC). Specifically, trade name "HLC-8120 GPC" (manufactured by Tosoh Corp.) is used as a GPC apparatus to make a measurement under the following GPC conditions and the weight-average molecular weight is calculated for standard polystyrene from the found value.

### GPC Conditions

· Sample concentration: 0.2% by weight (tetrahydrofuran solution)
· Sample injection amount: 10 µL
· Eluent: tetrahydrofuran (THF)
· Flow rate: 0.6 mL/min
· Column temperature (measuring temperature): 40°C
· Column: trade name "TSKgelSuperHM-H/-H4000/H3000/H2000" (manufactured by Tosho Corp.)
· Detector: differential refractometer

### [Pressure-Sensitive Adhesive Composition Comprising Acrylic Polymer (a) and Oligomer (b)]

In the oligomer-containing acrylic pressure-sensitive adhesive composition [pressure-sensitive adhesive composition comprising the acrylic polymer (a) and the oligomer (b)], the proportion of the acrylic polymer (a) to the oligomer (b) is not particularly limited. However, the proportion of the oligomer (b) to be used can be, for example, 10-35 parts by weight (preferably 15-30 parts by weight) per 100 parts by weight of the acrylic polymer (a). In case where the proportion of the oligomer (b) is less than 10 parts by weight per 100 parts by weight of the acrylic polymer (a), the effect of the addition of the oligomer (b) is less apt to be produced. On the other hand, in case where the proportion thereof exceeds 35 parts by weight, there is a possibility that the oligomer (b) might considerably influence the pressure-sensitive adhesive properties of the acrylic polymer (a).

This oligomer-containing acrylic pressure-sensitive adhesive composition may contain known additives besides the acrylic polymer (a) and the oligomer (b) according to need. Examples of the additives include crosslinking agents, ultraviolet absorbers, antioxidants, light stabilizers, aging inhibitors, releasability regulators, tackifiers, plasticizers, softeners, fillers, colorants (pigments, dyes, etc.), surfactants, and antistatic agent.

In the invention, a crosslinking agent can be used to crosslink the acrylic polymer (a) and the oligomer (b) to thereby enable the pressure-sensitive adhesive to have further enhanced cohesive force. It is therefore preferred that the oligomer-containing acrylic pressure-sensitive adhesive composition in the invention should contain a crosslinking agent besides the acrylic polymer (a) and the oligomer (b). A preferred crosslinking method is thermal crosslinking.

Examples of the crosslinking agent include a wide range of known crosslinking agents. Especially preferred crosslinking agents are polyfunctional melamine compounds, polyfunctional epoxy compounds, and polyfunctional isocyanate compounds. Such crosslinking agents can be used alone or as a mixture of two or more thereof.

Examples of the polyfunctional melamine compounds include methylated trimethylolmelamine and butylated hexamethylolmelamine. Examples of the polyfunctional epoxy compounds include diglycidylaniline and glycerol diglycidyl ether. Examples of the polyfunctional isocyanate compounds include tolylene diisocyanate, hexamethylene diisocyanate, poly(methylenepolyphenyl isocyanate), diphenylmethane diisocyanate, diphenylmethane diisocyanate dimer, products of the reaction of trimethylolpropane with tolylene diisocyanate, products of the reaction of trimethylolpropane with hexamethylene diisocyanate, polyether polyisocyanates, and polyester polyisocyanates.

The amount of the crosslinking agent to be used is not particularly limited. For example, the amount thereof can be selected in the range of generally 0.001-20 parts by weight (preferably 0.001-10 parts by weight) per 100 parts by weight of the acrylic polymer (a). Crosslinking agents can be used alone or in combination of two or more thereof.

The oligomer-containing acrylic pressure-sensitive adhesive composition can be prepared by mixing the acrylic polymer (a) with the oligomer (b) and further with additives, e.g., a crosslinking agent, according to need.

### [Transparent Double-Sided Pressure-Sensitive Adhesive Tape or Sheet]

As described above, the transparent double-sided pressure-sensitive adhesive tape or sheet of the invention has a constitution which comprises a transparent substrate and a transparent pressure-sensitive adhesive layer disposed on each side of the substrate and in which the transparent pressure-sensitive adhesive layer disposed on at least one side of the transparent substrate is a transparent pressure-sensitive adhesive layer formed from the oligomer-containing acrylic pressure-sensitive adhesive composition. Namely, of the two transparent pressure-sensitive adhesive layers formed respectively on both sides of the transparent substrate, at least either (i.e., one or both) is a layer formed from the oligomer-containing acrylic pressure-sensitive adhesive composition. In the invention, although at least either of the transparent pressure-sensitive adhesive layers is a layer formed from the oligomer-containing acrylic pressure-sensitive adhesive composition, it is preferred that both of the transparent pressure-sensitive adhesive layers have been formed from the oligomer-containing acrylic pressure-sensitive adhesive composition.

In the case where only one of the two transparent pressure-sensitive adhesive layers disposed respectively on both sides of the transparent substrate is a layer formed from the oligomer-containing acrylic pressure-sensitive adhesive composition, the pressure-sensitive adhesive composition used for forming the other transparent pressure-sensitive adhesive layer is not particularly limited as long as it is a pressure-sensitive adhesive composition capable of forming a transparent pressure-sensitive adhesive layer. Examples thereof include known acrylic pressure-sensitive adhesive compositions, e.g., pressure-sensitive adhesive compositions which comprise the acrylic polymer (a) and do not contain the oligomer (b).

The thickness of the transparent pressure-sensitive adhesive layer formed on each side of the transparent substrate is not particularly limited and is, for example, about 5-1,000 µm (preferably 10-100 µm). Each transparent pressure-sensitive adhesive layer may have either a single-layer constitution or a multilayer constitution.

### (Transparent Substrate)

The transparent substrate is not particularly limited as long as it is a substrate having transparency. However, it is preferred to use a transparent plastic substrate. Examples of the material of the transparent plastic substrate include plastic materials such as polyesters, e.g., poly(ethylene terephthalate) (PET), acrylic resins, e.g., poly(methyl methacrylate) (PMMA), polycarbonates, triacetylcellulose, polysulfones, polyarylates, trade name "Arton" (cycloolefin polymer; manufactured by JSR Co., Ltd.), and trade name "Zeonor" (cycloolefin polymer; manufactured by Nippon Zeon Co., Ltd.). Such plastic materials can be used alone or in combination of two or more thereof. A film or sheet made of one or more of these plastic materials (sometimes referred to inclusively as "plastic film") is used as the transparent substrate. It is preferred to use a highly transparent plastic film as the transparent substrate.

Preferred of those transparent plastic substrates are transparent plastic substrates having excellent heat resistance. Namely, it is preferred to use, as the transparent substrate, a transparent plastic substrate which is inhibited or prevented from deforming under severe conditions such as high-temperature conditions or high-temperature high-humidity conditions. The transparent substrate especially preferably is a PET film or sheet.

The thickness of the transparent substrate is not particularly limited. For example, it can be selected in the range of about 4-100 µm (preferably 4-25 µm).

The transparent substrate may have either a single-layer constitution or a multilayer constitution. The surfaces of the transparent substrate may have undergone an appropriate surface treatment which is known or in common use, e.g., a physical treatment such as corona discharge treatment or plasma treatment or a chemical treatment such as priming.

It is desirable in the invention that a release liner should be superposed on each transparent pressure-sensitive adhesive layer for the purpose of protecting the transparent pressure-sensitive adhesive layer. The release liner to be used is not particularly limited and can be suitably selected from known release liners.

The transparent double-sided pressure-sensitive adhesive tape or sheet may have other layers (e.g., an interlayer and an undercoat layer) as long as these layers do not lessen the effects of the invention.

It is preferred that the transparent double-sided pressure-sensitive adhesive tape or sheet of the invention should have high transparency. For attaining this, the substrate and pressure-sensitive adhesives which constitute the transparent double-sided pressure-sensitive adhesive tape or sheet are ones having transparency (a transparent substrate and transparency pressure-sensitive adhesive layers). The transparent double-sided pressure-sensitive adhesive tape or sheet desirably has such transparency that the total light transmittance thereof as measured in the visible light wavelength region (in accordance with JIS K 7361) is, for example, 85% or higher (preferably 90% or higher, more preferably 95% or higher).

The haze of the transparent double-sided pressure-sensitive adhesive tape or sheet (in accordance with JIS K 7136) can be selected in the range of, for example, up to 2.0% (preferably up to 1.5%, more preferably up to 1.0%).

The transparent double-sided pressure-sensitive adhesive tape or sheet of the invention can be produced by processes for producing ordinary double-sided pressure-sensitive adhesive tapes or sheets. For example, it can be produced by: a method in which given pressure-sensitive adhesive compositions (e.g., the oligomer-containing acrylic pressure-sensitive adhesive composition and another pressure-sensitive adhesive composition) are directly applied respectively to both sides of a transparent substrate in such amounts as to result in respective given thicknesses on a dry basis; a method in which given pressure-sensitive adhesive compositions (e.g., the oligomer-containing acrylic pressure-sensitive adhesive composition and another pressure-sensitive adhesive composition) are applied to one or two separators on given releasant-treated sides thereof in such amounts as to result in respective given thicknesses on a dry basis to thereby form two transparent pressure-sensitive adhesive layers, which are then transferred respectively to given sides of a transparent substrate; or a method comprising a combination of these two methods (specifically, a method in which one transparent pressure-sensitive adhesive layer is formed by directly applying a pressure-sensitive adhesive composition to a transparent substrate on a given side thereof and the other transparent pressure-sensitive adhesive layer is formed by transferring a transparent pressure-sensitive adhesive layer formed on a separator to the other side of the transparent substrate).

For applying pressure-sensitive adhesive compositions, a coater in common use can be used, such as, e.g., a gravure roll coater, reverse-roll coater, kiss-roll coater, dip-roll coater, bar coater, knife coater, or spray coater.

The transparent double-sided pressure-sensitive adhesive tape or sheet may be cut into an appropriate width and wound into a roll. Namely, it may be in the form of a pressure-sensitive adhesive tape roll. In the transparent double-sided pressure-sensitive adhesive tape or sheet in such a roll form, the two transparent pressure-sensitive adhesive layers may be protected respectively by two release liners or may be protected by one release liner treated with a release agent on both sides.

The transparent double-sided pressure-sensitive adhesive tape or sheet of the invention has a transparent pressure-sensitive adhesive layer formed from the oligomer-containing acrylic pressure-sensitive adhesive composition and the other components thereof including the substrate have transparency. It can hence has excellent transparency. Furthermore, by avoiding the use of any ingredient which may cause a color change [e.g., a nitrogen-containing monomer as a monomer ingredient for the acrylic polymer (a) or oligomer (b)], the double-sided pressure-sensitive adhesive tape or sheet can be effectively prevented from changing in color. Thus, the double-sided pressure-sensitive adhesive tape or sheet can retain high transparency and high unsusceptibility to discoloration over long.

When bonded to adherends, e.g., a transparent plastic base, through the transparent pressure-sensitive adhesive layers, the transparent double-sided pressure-sensitive adhesive tape or sheet is excellent in lifting/peeling preventive properties (unsusceptibility to peeling by outgassing), i.e., the property of preventing the lifting or peeling caused at the adhering interfaces by the bubbles (outgassing) generated from the transparent plastic base, etc. Thus, the lifting or peeling caused at the adhering interfaces by the bubbles (outgassing) generated from the transparent plastic base, etc. can be effectively inhibited or prevented. Namely, the double-sided pressure-sensitive adhesive tape or sheet has excellent durability and can satisfy long-term adhering reliability.

In addition, since the transparent double-sided pressure-sensitive adhesive tape or sheet is a substrate-based double-sided pressure-sensitive adhesive tape or sheet having a transparent substrate, it is excellent in warpage preventive properties, i.e., the property of preventing adherends such as, e.g., a touch panel employing a transparent plastic base (e.g., F/F/P type touch panel) from warping even under severe conditions causative of warpage thereof. Because of this, an F/F/P type touch panel or the like which employs a transparent plastic base having a small thickness can be effectively inhibited or prevented from warping even under severe conditions causative of warpage thereof (e.g., severe conditions including a high temperature or including a high temperature and a high humidity). Consequently, in touch panels such as, e.g., F/F/P type touch panels, a transparent plastic base having a smaller thickness than those heretofore in use can be employed.

The transparent double-sided pressure-sensitive adhesive tape or sheet of the invention can hence be suitable for use as a transparent double-sided pressure-sensitive adhesive tape or sheet in producing a touch panel having the constitution comprising a transparent plastic base as a transparent reinforcing plate and, laminated thereto, two transparent conductive plastic films disposed so that those sides of the films which have a conductive layer formed thereon face each other (a touch panel of the type having a transparent base). Namely, the transparent double-sided pressure-sensitive adhesive tape or sheet of the invention is useful as a pressure-sensitive adhesive tape or sheet to be applied to a transparent plastic base in producing a touch panel of the type having a transparent plastic base.

Fig. 2 is a diagrammatic sectional view showing one example of touch panels which employ the transparent double-sided pressure-sensitive adhesive tape or sheet shown in Fig. 1 and are of the type having a transparent plastic base. In Fig. 2, numeral 5 denotes a touch panel of the type having a transparent plastic base (sometimes referred to simply as "touch panel"), and 51 denotes two transparent conductive plastic films having a constitution in which those sides of the films which have a conductive layer formed thereon face each other (sometimes referred to as "touch panel main body part"). Numeral 51a denotes an upper conductive plastic film, 51b a lower conductive plastic film, 51c an adhesive layer, 51d a silver paste layer, and 52 a transparent plastic base. Furthermore, numerals 1 to 4 have the same meanings as defined above, i.e., 1 denotes a transparent double-sided pressure-sensitive adhesive sheet, 2 a transparent substrate, 3 a transparent pressure-sensitive adhesive layer, and 4 a transparent pressure-sensitive adhesive layer. In the touch panel 5 shown in Fig. 2, the touch panel main body part 51 has been laminated to the transparent plastic base 52 through the transparent double-sided pressure-sensitive adhesive tape or sheet 1. Specifically, at least the transparent pressure-sensitive adhesive layer 4, of the two transparent pressure-sensitive adhesive layers (3 and 4) in the transparent double-sided pressure-sensitive adhesive tape or sheet 1, is a transparent pressure-sensitive adhesive layer formed from the oligomer-containing acrylic pressure-sensitive adhesive composition, and the transparent double-sided pressure-sensitive adhesive tape or sheet 1 has been laminated to the transparent plastic base 52 so that this transparent pressure-sensitive adhesive layer 4 is in contact with the transparent plastic base 52. Furthermore, the transparent pressure-sensitive adhesive layer 3 is a transparent pressure-sensitive adhesive layer formed from either the oligomer-containing acrylic pressure-sensitive adhesive composition or another pressure-sensitive adhesive composition and has been bonded to the touch panel main body part 51 (i.e., to the lower conductive plastic film 51b in the touch panel main body part 51). The touch panel main body part 51 has a constitution in which the two conductive plastic films (51a and 51b) are disposed so that those sides of the films which have a conductive layer formed thereon face each other, with the adhesive layer 51c and the silver paste layer 51d interposed between these.

As described above, the transparent double-sided pressure-sensitive adhesive tape or sheet in the invention can be used in the constitution in which the transparent pressure-sensitive adhesive layer formed from the oligomer-containing acrylic pressure-sensitive adhesive composition has been bonded to the transparent plastic base.

### [Touch Panel of the Type Having Transparent Plastic Base]

Examples of the touch panel of the type having a transparent plastic base include touch panels having a constitution in which two transparent conductive plastic films disposed so that those sides of the films which have a conductive layer formed thereon face each other have been laminated to a transparent plastic base (i.e., touch panels of the so-called "F/F/P type"), such as those shown in Figs 2 and 4. In such touch panels of the type having a transparent plastic base (i.e., "F/F/P type" touch panels), examples of the two transparent conductive plastic films disposed so that those sides of the films which have a conductive layer formed thereon face each other include two transparent conductive poly(ethylene terephthalate) films each having a conductive layer formed on one side (conductive PET films) which are disposed so that the conductive-layer sides of the films face each other (opposed disposition) and which have been laminated to each other through an adhesive layer and a silver paste layer.

The conductive PET has a constitution comprising a poly(ethylene terephthalate) film (PET film) and a transparent conductive film formed as a conductive layer on one side thereof. As the transparent conductive film can be used, for example, a transparent thin film of indium-tin oxide (ITO). Incidentally, the upper conductive PET serves as an upper electrode and the lower conductive PET serves as a lower electrode.

Examples of the transparent plastic base include transparent bases made of polycarbonates, transparent bases made of acrylic resins (e.g., transparent bases made of poly(methyl methacrylate)), transparent bases made of polyesters (e.g., transparent bases made of poly(ethylene terephthalate)), and transparent bases made of triacetylcellulose. Transparent bases made of polycarbonates are preferred.

Such transparent plastic bases can be made from a single material or a combination of two or more materials. The transparent plastic base to be used may have a single-layer constitution or a multilayer constitution.

The thickness of the transparent plastic base is not particularly limited and may be smaller than those of transparent plastic bases heretofore in use. Specifically, the thickness of the transparent plastic base can be selected in the range of, for example, 100 µm to 3.0 mm (preferably 250 µm to 2.0 mm, more preferably 500 µm to 1.0 mm). Even when such a transparent plastic base having a smaller thickness than those heretofore in use is employed, this base is effectively inhibited or prevented from warping and can be effectively utilized for the touch panel.

The touch panel of the type having a transparent plastic base can be used as a touch panel in various displays such as, e.g., liquid-crystal displays, cathode-ray tube displays, plasma displays, and EL displays.

The transparent double-sided pressure-sensitive adhesive tape or sheet of the invention can be advantageously used also as a transparent double-sided pressure-sensitive adhesive tape or sheet for applying optical films. For example, when it is used as a transparent double-sided pressure-sensitive adhesive tape or sheet in applying an optical film to a transparent base, the adhering interfaces are prevented from blistering or undergoing resultant lifting/peeling even when outgassing from the transparent base, optical film, etc. occurs under severe conditions such as high-temperature conditions. Namely, the pressure-sensitive adhesive tape or sheet shows excellent adhesive properties in adhering the transparent base to the optical film and the excellent visibility attained with the optical film can be maintained. Consequently, use of the pressure-sensitive adhesive tape or sheet does not result in an appearance failure.

The optical film is not particularly limited as long as it is a film (or sheet) having optical properties. Examples thereof include lightguide films, antireflection films, and electrically conductive films.

The transparent base to be laminated to the optical film is, for example, a transparent plastic base, a transparent glass base, or the like. The transparent plastic base is not particularly limited, and examples thereof include transparent bases made of polycarbonates, transparent bases made of acrylic resins (e.g., transparent bases made of poly(methyl methacrylate)), transparent bases made of polyesters (e.g., transparent bases made of poly(ethylene terephthalate)), and transparent bases made of triacetylcellulose. The transparent glass base is not particularly limited and a transparent base made of any of various glasses can be used. Examples of such transparent bases (e.g., transparent plastic bases and transparent glass bases) include touch panels and various display panels (screen panels in various displays). Besides liquid-crystal panels, examples of the display panels include the screen panels of cathode-ray tubes, screen panels of plasma displays, and screen panels of EL displays.

The product or apparatus obtained by bonding an optical film to a transparent base with the transparent double-sided pressure-sensitive adhesive tape or sheet of the invention can be used as a display or as a member of a display. Examples of such displays include liquid-crystal displays, cathode-ray tube displays, plasma displays, and EL displays.

The invention will be explained below in more detail by reference to Examples, but the invention should not be construed as being limited by these Examples.

### ACRYLIC POLYMER PREPARATION EXAMPLE 1

Into a separable flask were introduced 97 parts by weight of butyl acrylate and 3 parts by weight of acrylic acid as monomer ingredients, 0.3 parts by weight of 2,2'-azobisisobutyronitrile as a polymerization initiator, and 233.8 parts by weight of ethyl acetate as a polymerization solvent. The contents were stirred for 1 hour while introducing nitrogen gas into the flask. After the oxygen present in the polymerization system was thus removed, the reaction mixture was heated to 63°C and reacted for 10 hours to obtain an acrylic polymer solution having a solid concentration of 30% by weight (sometimes referred to as "acrylic polymer solution A"). The acrylic polymer (sometimes referred to as "polymer A") in this acrylic polymer solution A had a weight-average molecular weight of 550,000.

### ACRYLIC POLYMER PREPARATION EXAMPLE 2

The same procedure as in Acrylic Polymer Preparation Example 1 was conducted, except that use was made of 94 parts by weight of butyl acrylate and 6 parts by weight of acrylic acid as monomer ingredients and 0.2 parts by weight of 2,2'-azobisisobutyronitrile as a polymerization initiator. Thus, an acrylic polymer solution having a solid concentration of 30% by weight (sometimes referred to as "acrylic polymer solution B") was obtained. The acrylic polymer (sometimes referred to as "polymer B") in this acrylic polymer solution B had a weight-average molecular weight of 700,000.

### ACRYLIC POLYMER PREPARATION EXAMPLE 3

The same procedure as in Acrylic Polymer Preparation Example 1 was conducted, except that use was made of 80 parts by weight of butyl acrylate, 15 parts by weight of methyl acrylate, and 5 parts by weight of acrylic acid as monomer ingredients. Thus, an acrylic polymer solution having a solid concentration of 30% by weight (sometimes referred to as "acrylic polymer solution C") was obtained. The acrylic polymer (sometimes referred to as "polymer C") in this acrylic polymer solution C had a weight-average molecular weight of 600,000.

### OLIGOMER PREPARATION EXAMPLE 1

Into a separable flask were introduced 96 parts by weight of cyclohexyl methacrylate [glass transition temperature of the homopolymer (poly(cyclohexyl methacrylate)): 66°C] and 4 parts by weight of acrylic acid as monomer ingredients, 3 parts by weight of 2-mercaptoethanol as a chain transfer agent, 0.2 parts by weight of 2,2'-azobisisobutyronitrile as a polymerization initiator, and 120 parts by weight of toluene as a polymerization solvent. The contents were stirred for 1 hour while introducing nitrogen gas into the flask. After the oxygen present in the polymerization system was thus removed, the reaction mixture was heated to 70°C and reacted for 3 hours and was then further reacted at 75°C for 2 hours to obtain an oligomer solution having a solid concentration of 50% by weight (sometimes referred to as "oligomer solution A"). The oligomer (sometimes referred to as "oligomer A") in this oligomer solution A had a weight-average molecular weight of 4,000.

### OLIGOMER PREPARATION EXAMPLE 2

Into a separable flask were introduced 94 parts by weight of cyclohexyl methacrylate [glass transition temperature of the homopolymer (poly(cyclohexyl methacrylate)): 66°C] and 6 parts by weight of acrylic acid as monomer ingredients, 10 parts by weight of α-methylstyrene dimer as a chain transfer agent, 10 parts by weight of 2,2'-azobisisobutyronitrile as a polymerization initiator, and 120 parts by weight of toluene as a polymerization solvent. The contents were stirred for 1 hour while introducing nitrogen gas into the flask. After the oxygen present in the polymerization system was thus removed, the reaction mixture was heated to 85°C and reacted for 5 hours to obtain an oligomer solution having a solid concentration of 50% by weight (sometimes referred to as "oligomer solution B"). The oligomer (sometimes referred to as "oligomer B") in this oligomer solution B had a weight-average molecular weight of 4,300.

### OLIGOMER PREPARATION EXAMPLE 3

The same procedure as in Oligomer Preparation Example 1 was conducted, except that 1.5 parts by weight of 2-mercaptoethanol was used as a chain transfer agent. Thus, an oligomer solution having a solid concentration of 50% by weight (sometimes referred to as "oligomer solution C") was obtained. The oligomer (sometimes referred to as "oligomer C") in this oligomer solution C had a weight-average molecular weight of 8,100. Namely, the weight-average molecular weight of oligomer C was higher than 6,000.

### OLIGOMER PREPARATION EXAMPLE 4

Into a separable flask were introduced 100 parts by weight of cyclohexyl methacrylate [glass transition temperature of the homopolymer (poly(cyclohexyl methacrylate)): 66°C] as a monomer ingredient, 3 parts by weight of 2-mercaptoethanol as a chain transfer agent, 0.2 parts by weight of 2,2'-azobisisobutyronitrile as a polymerization initiator, and 120 parts by weight of toluene as a polymerization solvent. The contents were stirred for 1 hour while introducing nitrogen gas into the flask. After the oxygen present in the polymerization system was thus removed, the reaction mixture was heated to 70°C and reacted for 3 hours and was then further reacted at 75°C for 2 hours to obtain an oligomer solution having a solid concentration of 50% by weight (sometimes referred to as "oligomer solution D"). The oligomer (sometimes referred to as "oligomer D") in this oligomer solution D had a weight-average molecular weight of 3,700. Consequently, oligomer D was produced without using a carboxyl-containing monomer as a monomer ingredient.

### OLIGOMER PREPARATION EXAMPLE 5

Into a separable flask were introduced 97 parts by weight of ethyl acrylate [glass transition temperature of the homopolymer (poly(ethyl acrylate)): 65°C] and 3 parts by weight of acrylic acid as monomer ingredients, 3 parts by weight of 2-mercaptoethanol as a chain transfer agent, 0.2 parts by weight of 2,2'-azobisisobutyronitrile as a polymerization initiator, and 120 parts by weight of toluene as a polymerization solvent. The contents were stirred for 1 hour while introducing nitrogen gas into the flask. After the oxygen present in the polymerization system was thus removed, the reaction mixture was heated to 70°C and reacted for 3 hours and was then further reacted at 75°C for 2 hours to obtain an oligomer solution having a solid concentration of 50% by weight (sometimes referred to as "oligomer solution E"). The oligomer (sometimes referred to as "oligomer E") in this oligomer solution E had a weight-average molecular weight of 4,500. Consequently, oligomer E was produced without using an ethylenically unsaturated monomer having a cyclic structure as the main monomer ingredient.

In Acrylic Polymer Preparation Examples 1 to 3 and Oligomer Preparation Examples 1 to 5, the weight-average molecular weight (Mw) of each of the acrylic polymers (polymers A to C) and oligomers (oligomers A to E) was determined by gel permeation chromatography (GPC) through a measurement made with a GPC apparatus "HLC-8120 GPC" (trade name; manufactured by Tosoh Corp.) under the following GPC conditions and through calculation for standard polystyrene. GPC Conditions
· Sample concentration: 0.2% by weight (tetrahydrofuran solution)
· Sample injection amount: 10 µL
· Eluent: tetrahydrofuran (THF)
· Flow rate: 0.6 mL/min
· Column temperature (measuring temperature): 40°C
· Column: trade name "TSKgelSuperHM-H/-H4000/H3000/H2000" (manufactured by Tosho Corp.)
· Detector: differential refractometer

### EXAMPLE 1

A hundred parts by weight (on solid basis) of acrylic polymer solution A was mixed with 20 parts by weight (on solid basis) of oligomer A and 0.05 parts by weight (on solid basis) of trade name "Tetrad C" (tetrafunctional epoxy crosslinking agent; manufactured by Mitsubishi Gas Chemical Company, Inc.) as a crosslinking agent to prepare a pressure-sensitive adhesive solution (sometimes referred to as "pressure-sensitive adhesive solution A"). This pressure-sensitive adhesive solution A was applied to the releasability-imparted side of a poly(ethylene terephthalate) film (thickness, 38 µm) treated on one side with a release agent, by curtain coating in a thickness of about 25 µm on a dry basis. The coating was dried with heating at 130°C for 3 minutes to form a transparent pressure-sensitive adhesive layer (sometimes referred to as "transparent pressure-sensitive adhesive layer A"). Thereafter, a poly(ethylene terephthalate) (PET) film having a thickness of 25 µm (total light transmittance, 90.0%; haze, 1.3%; sometimes referred to as "substrate A") was laminated to the transparent pressure-sensitive adhesive layer A. Furthermore, the pressure-sensitive adhesive solution A was applied to the substrate A by curtain coating in a thickness of about 25 µm on a dry basis and dried with heating at 130°C for 3 minutes to form a transparent pressure-sensitive adhesive layer, as in the formation of the transparent pressure-sensitive adhesive layer A. The resultant structure was aged at 50°C for 72 hours to thereby produce a pressure-sensitive adhesive sheet. This pressure-sensitive adhesive sheet is a double-sided pressure-sensitive adhesive sheet of the substrate-based type.

### EXAMPLE 2

A pressure-sensitive adhesive solution (sometimes referred to as "pressure-sensitive adhesive solution B") was prepared in the same manner as in Example 1, except that 100 parts by weight (on solid basis) of acrylic polymer solution B was mixed with 20 parts by weight (on solid basis) of oligomer solution B and 0.05 parts by weight (on solid basis) of trade name "Tetrad C" (tetrafunctional epoxy crosslinking agent; manufactured by Mitsubishi Gas Chemical Company, Inc.) as a crosslinking agent. A pressure-sensitive adhesive sheet was produced in the same manner as in Example 1, except that the pressure-sensitive adhesive solution B was used and a PET film having a thickness of 12 µm (total light transmittance, 90.0%; haze, 1.3%; sometimes referred to as "substrate B") was used in place of substrate A. This pressure-sensitive adhesive sheet is a double-sided pressure-sensitive adhesive sheet of the substrate-based type.

### EXAMPLE 3

A hundred parts by weight (on solid basis) of acrylic polymer solution A was mixed with 0.05 parts by weight (on solid basis) of trade name "Tetrad C" (tetrafunctional epoxy crosslinked agent; manufactured by Mitsubishi Gas Chemical Company, Inc.) as a crosslinking agent to prepare a pressure-sensitive adhesive solution (sometimes referred to as "pressure-sensitive adhesive solution C").

Pressure-sensitive adhesive solution A prepared in the same manner as in Example 1 was applied to the releasability-imparted side of a poly(ethylene terephthalate) film (thickness, 38 µm) treated on one side with a release agent, by curtain coating in a thickness of about 25 µm on a dry basis. The coating was dried with heating at 130°C for 3 minutes to form a transparent pressure-sensitive adhesive layer (transparent pressure-sensitive adhesive layer A). Thereafter, substrate B [PET film (total light transmittance, 90.0%; haze, 1.3%; thickness, 12 µm)] was laminated to the transparent pressure-sensitive adhesive layer A. Furthermore, the pressure-sensitive adhesive solution C was applied to the substrate B by curtain coating in a thickness of about 25 µm on a dry basis and dried with heating at 130°C for 3 minutes to form a transparent pressure-sensitive adhesive layer (sometimes referred to as "transparent pressure-sensitive adhesive layer C"), as in the formation of the transparent pressure-sensitive adhesive layer A. The resultant structure was aged at 50°C for 72 hours to thereby produce a pressure-sensitive adhesive sheet. This pressure-sensitive adhesive sheet is a double-sided pressure-sensitive adhesive sheet of the substrate-based type.

### EXAMPLE 4

A pressure-sensitive adhesive solution (sometimes referred to as "pressure-sensitive adhesive solution D") was prepared in the same manner as in Example 1, except that 100 parts by weight (on solid basis) of acrylic polymer solution C was mixed with 20 parts by weight (on solid basis) of oligomer solution A and 0.05 parts by weight (on solid basis) of trade name "Tetrad C" (tetrafunctional epoxy crosslinking agent; manufactured by Mitsubishi Gas Chemical Company, Inc.) as a crosslinking agent. A pressure-sensitive adhesive sheet was produced in the same manner as in Example 1, except that the pressure-sensitive adhesive solution D was used and substrate B was used in place of substrate A. This pressure-sensitive adhesive sheet is a double-sided pressure-sensitive adhesive sheet of the substrate-based type.

### COMPARATIVE EXAMPLE 1

A pressure-sensitive adhesive solution (sometimes referred to as "pressure-sensitive adhesive solution E") was prepared in the same manner as in Example 1, except that 100 parts by weight (on solid basis) of acrylic polymer solution B was mixed with 20 parts by weight (on solid basis) of oligomer solution C and 0.05 parts by weight (on solid basis) of trade name "Tetrad C" (tetrafunctional epoxy crosslinking agent; manufactured by Mitsubishi Gas Chemical Company, Inc.) as a crosslinking agent. A pressure-sensitive adhesive sheet was produced in the same manner as in Example 1, except that the pressure-sensitive adhesive solution E was used and substrate B was used in place of substrate A. This pressure-sensitive adhesive sheet is a double-sided pressure-sensitive adhesive sheet of the substrate-based type.

### COMPARATIVE EXAMPLE 2

A pressure-sensitive adhesive solution (sometimes referred to as "pressure-sensitive adhesive solution F") was prepared in the same manner as in Example 1, except that 100 parts by weight (on solid basis) of acrylic polymer solution B was mixed with 20 parts by weight (on solid basis) of oligomer solution D and 0.05 parts by weight (on solid basis) of trade name "Tetrad C" (tetrafunctional epoxy crosslinking agent; manufactured by Mitsubishi Gas Chemical Company, Inc.) as a crosslinking agent. A pressure-sensitive adhesive sheet was produced in the same manner as in Example 1, except that the pressure-sensitive adhesive solution F was used and substrate B was used in place of substrate A. This pressure-sensitive adhesive sheet is a double-sided pressure-sensitive adhesive sheet of the substrate-based type.

### COMPARATIVE EXAMPLE 3

A pressure-sensitive adhesive solution (sometimes referred to as "pressure-sensitive adhesive solution G") was prepared in the same manner as in Example 1, except that 100 parts by weight (on solid basis) of acrylic polymer solution B was mixed with 20 parts by weight (on solid basis) of oligomer solution E and 0.05 parts by weight (on solid basis) of trade name "Tetrad C" (tetrafunctional epoxy crosslinking agent; manufactured by Mitsubishi Gas Chemical Company, Inc.) as a crosslinking agent. A pressure-sensitive adhesive sheet was produced in the same manner as in Example 1, except that the pressure-sensitive adhesive solution G was used and substrate B was used in place of substrate A. This pressure-sensitive adhesive sheet is a double-sided pressure-sensitive adhesive sheet of the substrate-based type.

### COMPARATIVE EXAMPLE 4

Pressure-sensitive adhesive solution A prepared in the same manner as in Example 1 was applied to the releasability-imparted side of a poly(ethylene terephthalate) film (thickness, 38 µm) treated on one side with a release agent, by curtain coating in a thickness of about 25 µm on a dry basis. The coating was dried with heating at 130°C for 3 minutes and then aged at 50°C for 72 hours to thereby produce a pressure-sensitive adhesive sheet. This pressure-sensitive adhesive sheet is a double-sided pressure-sensitive adhesive sheet of the substrate-less type.

### (Evaluation)

The pressure-sensitive adhesive sheets obtained in Examples 1 to 4 and Comparative Examples 1 to 4 were evaluated for transparency, lifting/peeling preventive properties, and warpage preventive properties by the following measurement or evaluation methods. The evaluation results obtained are shown in Table 1.

### (Method of Evaluation of Transparency)

Each pressure-sensitive adhesive sheet was laminated to a slide glass (trade name "S-1111" manufactured by MATSUNAMI Ltd.) to produce a test piece having a layer constitution comprising pressure-sensitive adhesive layer/slide glass. The haze (%) of this test piece was measured with a hazeometer (trade name "HM-150" manufactured by Murakami Color Research Laboratory). The value of haze (%) was determined using the equation: haze = [diffuse transmittance (%)/total light transmittance (%)] × 100. The haze (%) of the slide glass alone was 0.4 (%).

### (Method of Evaluation of Lifting/Peeling Preventive Properties)

Each pressure-sensitive adhesive sheet was laminated to a poly(ethylene terephthalate) film (thickness, 188 µm; PET film). This laminate was applied and fixed to a polycarbonate plate (thickness, 1 mm; PC plate) to produce a sample piece having a layer constitution comprising PET film/pressure-sensitive adhesive sheet/PC plate. This sample piece was placed in a 70°C oven for 5 hours to thereby conduct a heat resistance test. After this heat resistance test, the sample piece was visually examined for the presence of appearance defects such as blisters and lifting at the adhering interface (interface between the pressure-sensitive adhesive layer and the polycarbonate plate) and evaluated based on the following criteria.

### <Evaluation Criteria>

A: Neither blisters nor lifting was observed at all.
B: Blisters or lifting was observed at least slightly.

### (Method of Evaluation of Warpage Preventive Properties)

Each pressure-sensitive adhesive sheet was laminated to a poly(ethylene terephthalate) film (thickness, 125 µm; PET film). This laminate was applied and fixed to a polycarbonate plate (thickness, 0.5 mm; PC plate) to produce a sample piece having a layer constitution comprising PET film/pressure-sensitive adhesive sheet/PC plate. This sample piece was placed in a thermo-hygrostatic chamber of 60°C × 95% RH for 250 hours or in a 70°C thermostatic chamber for 250 hours. After the sample piece was taken out and allowed to stand at room temperature for 24 hours, the PC plate was visually examined for warpage and evaluated based on the following criteria. The value of warpage means the maximum height of the sample piece from a flat surface on which the sample piece was placed (i.e., the maximum distance between the flat surface on which the sample piece was placed and that side of the sample piece which faced the surface).

### <Evaluation Criteria>

A: The warpage was less than 0.5 mm under either of the conditions (60°C × 95% RH and 70°C).
B: The warpage was 0.5 mm or more and 1.0 mm or less under at least either of the conditions (60°C × 95% RH and/or 70°C).
C: The warpage was more than 1.0 mm under at least either of the conditions (60°C × 95% RH and/or 70°C).

**Table 1**

| | | Example | | | | Comparative Example | | | |
|---|---|---|---|---|---|---|---|---|---|
| | | 1 | 2 | 3 | 4 | 1 | 2 | 3 | 4 |
| Pressure-sensitive adhesive layer on one side | | | | | | | | | |
| | Kind of polymer | A | B | A | C | B | B | B | A |
| | Weight-average molecular weight of polymer | 550,000 | 700,000 | 550,000 | 600,000 | 700,000 | 700,000 | 700,000 | 550,000 |
| | Kind of oligomer | A | B | A | A | C | D | E | A |
| | Weight-average molecular weight of oligomer | 4,000 | 4,300 | 4,000 | 4,000 | 8,100 | 3,700 | 4,500 | 4,000 |
| Pressure-sensitive adhesive layer on the other side | | same composition as the pressure-sensitive adhesive layer on that one side | same composition as the pressure-sensitive adhesive layer on that one side | | same composition as the pressure-sensitive adhesive layer on that one side | same composition as the pressure-sensitive adhesive layer on that one side | same composition as the pressure-sensitive adhesive layer on that one side | same composition as the pressure-sensitive adhesive layer on that one side | - |
| | Kind of polymer | | | A | | | | | |
| | Weight-average molecular weight of polymer | | | 550,000 | | | | | |
| | Kind of oligomer | | | - | | | | | |
| | Weight-average molecular weight of oligomer | | | - | | | | | |
| Substrate | | present | present | present | present | present | present | present | absent |
| | | (PET#25) | (PET#12) | (PET#12) | (PET#12) | (PET#12) | (PET#12) | (PET#12) | |
| Transparency (haze, %) | | 1.1 | 1.1 | 1.1 | 1.0 | 6.5 | 3.5 | 1.7 | 0.6 |
| Lifting/peeling preventive property | | A | A | A | A | B | A | B | A |
| Warpage preventive property | | A | A | A | B | A | A | A | C |

| | | | | | | | | | |
|---|---|---|---|---|---|---|---|---|---|
| "PET#25": 25 µm-thick poly(ethylene terephthalate) film "PET#12": 12 µm-thick poly(ethylene terephthalate) film | | | | | | | | | |

As apparent from Table 1, the pressure-sensitive adhesive sheets of the substrate-based type according to Examples 1 to 4 not only have excellent transparency but are excellent in lifting/peeling preventive properties and warpage preventive properties. Consequently, even under severe conditions, e.g., high-temperature conditions or high-temperature high-humidity conditions, these pressure-sensitive adhesive sheets can show excellent adhesive properties to retain satisfactory adhesion to the adherends and to enable the adherends to suffer no or almost no warpage. Because of this, adherends having a reduced thickness can be used.

While the invention has been described in detail and with reference to specific embodiments thereof, it will be apparent to one skilled in the art that various changes and modifications can be made therein without departing from the scope thereof.

## Claims

1. A transparent double-sided pressure-sensitive adhesive tape or sheet having a total light transmittance of 85% or higher in the visible light wavelength region and a haze of 2.0% or lower comprising a transparent substrate and a transparent pressure-sensitive adhesive layer disposed on each side of the substrate, wherein the transparent pressure-sensitive adhesive layer disposed on at least one side of the transparent substrate is a layer formed from a pressure-sensitive adhesive composition comprising the following acrylic polymer (a) and oligomer (b):
acrylic polymer (a): an acrylic polymer having a weight-average molecular weight of 500,000-900,000 formed from monomers comprising at least one alkyl (meth)acrylate in which the alkyl group has 4-12 carbon atoms as the main monomer ingredient and at least one carboxyl-containing monomer contained as another monomer ingredient in an amount of 3-10 parts by weight per 100 parts by weight of all monomer ingredients,
oligomer (b): an oligomer having a weight-average molecular weight of 3,000-6,000 formed from monomers comprising at least one ethylenically unsaturated monomer, as the main monomer ingredient, which gives a homopolymer having a glass transition temperature of 60-190°C and has a cyclic structure and at least one carboxyl-containing monomer contained as another monomer ingredient in an amount of 3-10 parts by weight per 100 parts by weight of all monomer ingredients.

2. The transparent double-sided pressure-sensitive tape or sheet of claim 1, wherein the proportion of the oligomer (b) is 10-35 parts by weight per 100 parts by weight of the acrylic polymer (a).

3. The transparent double-sided pressure-sensitive adhesive tape or sheet of claim 1 or 2, wherein the carboxyl-containing monomer as a monomer ingredient in each of the acrylic polymer (a) and the oligomer (b) is acrylic acid.

4. The transparent double-sided pressure-sensitive adhesive tape or sheet of any one of claims 1 to 3, wherein neither the monomer ingredients used for the acrylic polymer (a) nor the monomer ingredients used for the oligomer (b) include any monomer containing one or more nitrogen atoms.

5. A tough panel of the type having a transparent plastic base, the touch panel having a constitution in which the transparent double-sided pressure-sensitive adhesive tape or sheet of any one of claims 1 to 4 has been laminated to the transparent plastic base so that the transparent pressure-sensitive adhesive layer formed from the pressure-sensitive adhesive composition comprising the acrylic polymer (a) and the oligomer (b), of the two transparent pressure-sensitive adhesive layers of the transparent double-sided pressure-sensitive adhesive tape or sheet, is in contact with the transparent plastic base.

6. The touch panel of claim 5, wherein the transparent plastic base is a transparent base made of a polycarbonate.

## Patentansprüche

1. Ein transparentes, doppelseitiges, druckempfindliches Klebeband oder eine druckempfindliche Klebefolie mit einer gesamten Lichttransmission von 85 % oder höher im Bereich der sichtbaren Wellenlängenregion und einer Opazität von 2,0 % oder weniger, umfassend ein transparentes Substrat und eine transparente, druckempfindliche Klebeschicht, angeordnet auf jeder Seite des Substrates, wobei die transparente, druckempfindliche Klebeschicht, angeordnet an zumindest einer Seite des transparenten Substrates, eine Schicht ist, die ausgebildet ist aus einer druckempfindlichen Klebezusammensetzung, umfassend die folgenden Komponenten, Acrylpolymer (a) und Oligomer (b):
Acrylpolymer (a): Ein Acrylpolymer mit einem gewichtsgemittelten Molekulargewicht von 500.000 - 900.000, ausgebildet aus Monomeren, welche zumindest ein Alkyl(meth)acrylat als hauptsächliches Monomer-Ingredienz umfassen, in welchem die Alkylgruppe 4 - 12 Kohlenstoffatome als hauptsächliches Monomer-Ingredienz aufweist, und zumindest ein Carboxy-enthaltendes Monomer, enthalten als ein weiteres Monomer-Ingredienz in einer Menge von 3 bis 10 Gewichtsanteilen bezogen auf 100 Gewichtsanteile von allen Monomer-Ingredienzien,
Oligomer (b): Ein Oligomer mit einem gewichtsgemittelten Molekulargewicht von 3.000 - 6.000, ausgebildet aus Monomeren, welche zumindest ein ungesättigtes Monomer vom Ethylen-Typ als hauptsächliches Monomer-Ingredienz umfassen, welches ein Homopolymer ergibt mit einer Glasübergangstemperatur von 60 - 190 °C und eine zyklische Struktur aufweist, und zumindest ein Carboxyl-enthaltendes Monomer, enthalten als weiteres Monomer-Ingredienz in einer Menge von 3 - 10 Gewichtsanteilen pro 100 Gewichtsanteile von allen Monomer-Ingredienzien.

2. Das transparente, doppelseitige, druckempfindliche Klebeband oder die druckempfindliche Folie von Anspruch 1, wobei der Anteil des Oligomers (b) 10 - 35 Gewichtsanteile pro 100 Gewichtsanteile des Acrylpolymers (a) ist.

3. Das transparente, doppelseitige, druckempfindliche Klebeband oder die druckempfindliche Folie von Anspruch 1 oder 2, wobei das Carboxyl-enthaltende Monomer als ein Monomer-Ingredienz in jedem von Acrylpolymer (a) und Oligomer (b) Acrylsäure ist.

4. Das transparente, doppelseitige, druckempfindliche Klebeband oder die druckempfindliche Folie von irgendeinem der Ansprüche 1 bis 3, wobei weder die Monomer-Ingredienzien, die für das Acrylpolymer (a) eingesetzt werden, noch die Monomer-Ingredienzien, die für das Oligomer (b) eingesetzt werden, irgendein Monomer einschließen, welches ein oder mehrere Stickstoffatome enthält.

5. Eine Berührungstafel eines Typus mit einer transparenten Plastikunterlage, wobei die Berühungstafel eine Konstitution aufweist, in welcher das transparente, doppelseitige, druckempfindliche Klebeband oder die druckempfindliche Folie von irgendeinem der Ansprüche 1 bis 4 an die transparente Plastikunterlage laminiert worden ist, so dass die transparente, druckempfindliche Klebeschicht, ausgebildet aus der druckempfindlichen Klebezusammensetzung, welche das Acrylpolymer (a) und das Oligomer (b) umfasst, aus den beiden transparenten, druckempfindlichen Klebeschichten der transparenten, doppelseitigen, druckempfindlichen Klebeschicht oder der druckempfindlichen Folie, sich in Kontakt mit der transparenten Plastikunterlage befindet.

6. Die Berührungstafel von Anspruch 5, wobei die transparente Plastikunterlage eine transparente Unterlage ist, die aus Polycarbonat besteht.

## Revendications

1. Bande ou feuille adhésive autocollante double face transparente ayant une transmittance totale de 85 % ou plus dans la région de longueur d'onde de rayonnement visible et un voile de 2,0 % ou moins comprenant un substrat transparent et une couche adhésive autocollante transparente disposée sur chaque côté du substrat, dans laquelle la couche adhésive autocollante transparente disposée sur au moins un côté du substrat transparent est une couche formée d'une composition adhésive autocollante comprenant le polymère acrylique (a) et l'oligomère (b) suivants :
polymère acrylique (a) : un polymère acrylique ayant une masse moléculaire moyenne en masse de 500 000 à 900 000 formé à partir de monomères comprenant au moins un (méth)acrylate d'alkyle dans lequel le groupe alkyle comporte 4 à 12 atomes de carbone en tant qu'ingrédient principal de monomère et au moins un monomère contenant un groupe carboxyle contenu comme un autre ingrédient de monomère en une quantité de 3 à 10 parties en poids pour 100 parties en poids de tous les ingrédients de monomère,
oligomère (b) : un oligomère ayant une masse moléculaire moyenne en masse de 3 000 à 6 000 formé à partir de monomères comprenant au moins un monomère éthyléniquement insaturé, en tant qu'ingrédient principal de monomère, qui donne un homopolymère ayant une température de transition vitreuse de 60 à 190 °C et a une structure cyclique et au moins un monomère contenant un groupe carboxyle contenu en tant qu'un autre ingrédient de monomère en une quantité de 3 à 10 parties en poids pour 100 parties en poids de tous les ingrédients de monomère.

2. Bande ou feuille adhésive autocollante double face transparente selon la revendication 1, dans laquelle la proportion de l'oligomère (b) est de 10 à 35 parties en poids pour 100 parties en poids du polymère acrylique (a).

3. Bande ou feuille adhésive autocollante double face transparente selon la revendication 1 ou 2, dans laquelle le monomère contenant un groupe carboxyle en tant qu'ingrédient de monomère dans chacun du polymère acrylique (a) et de l'oligomère (b) est l'acide acrylique.

4. Bande ou feuille adhésive autocollante double face transparente selon l'une quelconque des revendications 1 à 3, dans laquelle ni les ingrédients de monomère utilisés pour le polymère acrylique (a) ni les ingrédients de monomère utilisés pour l'oligomère (b) ne comprennent de monomère quelconque contenant un ou plusieurs atomes d'azote.

5. Ecran tactile du type ayant une base plastique transparente, l'écran tactile ayant une constitution dans laquelle la bande ou feuille adhésive autocollante double face transparente selon l'une quelconque des revendications 1 à 4 a été stratifiée sur la base plastique transparente de sorte que la couche adhésive autocollante transparente formée à partir de la composition adhésive autocollante comprenant le polymère acrylique (a) et l'oligomère (b), des deux couches adhésives autocollantes transparentes de la bande ou feuille adhésive autocollante double face transparente, est en contact avec la base plastique transparente.

6. Ecran tactile selon la revendication 5, dans lequel la base plastique transparente est une base transparente constituée d'un poly(carbonate).
